# EUROPEAN PATENT SPECIFICATION

(11) **EP 0 350 468 B1**
(45) Date of publication and mention of the grant of the patent: **09.11.1994**
(21) Application number: 89830314.4
(22) Date of filing: 07.07.1989
(51) Int. Cl.: B29C 47/00, A47G 21/18

(54) **Method for making a straw for sucking beverages**
Verfahren zum Herstellen eines Trinkhalmes
Procédé de fabrication d'une paille pour boire

(30) Priority: 07.07.1988 IT 2127888
(43) Date of publication of application: 10.01.1990
(73) Proprietor: PLASTIC TUBE ASSEMBLY S.r.l., 70121 Bari (IT)
(72) Inventor: Leone, Marcello, I-70121 Bari (IT)
(74) Representative: Cicogna, Franco

(56) References cited:
- FR-A- 2 488 183
- GB-A- 2 173 686
- IT-U- 212 501
- US-A- 3 441 637
- US-A- 3 456 344
- PATENT ABSTRACTS OF JAPAN, vol. 6, no. 43 (M-117)[921], 17th March 1982;& JP-A-56 157 320

## Description

The present invention relates to a method for making an improved structure beverage sucking straw according to the preamble of claim 1. The invention also relates to the straw according to the preamble of claim 6, made by the subject making method.

As is known, drinks and beverages in general, particularly if they are contained in bottles, cans and the like, can advantageously be sucked by means of a straw member.

Also known is the fact that conventional sucking straw usually consist of a plastics material straw element, possibly provided with a bendable top portion.

On the other hand, known straws afford the possibility of sucking only a very small amount or flow of beverage and the user, in order to meet his/her thirst requirements is compelled to suck the beverage with quick subsequent sucking operations.

Straws have been also designed able of providing a rather great flow rate :however these high flow rate straws are rather complex construction-wise and the making thereof is based on the use of a lot of cascade arranged machines as well as on very complex and expensive finishing steps.

Thus, these high flow rate straws have a comparatively high cost which negatively affects a broad diffusion thereof on the market.

The document GB-A-2 173 686 discloses a method for making a beverage sucking straw having all of the features of the pre-characterizing part of the main claim.

This document also discloses a straw having the features of the pre-characterizing part of claim 6.

The document US-A-3 456 344 discloses a straw practically formed by two straws which are coupled by an intermediate separating wall: the straw of this reference has the drawback that it can not be easily printed on its outer surface since the intermediate separating wall is recessed with respect to the side end portions of the straw. Another drawback of the straw of this reference is that the central recessing separated wall, which separates the two straws forming the straw, prevents the used lips from perfectly adhering to the outer surface of the straw, so as to provide a not perfect suction by the user, and, moreover, the straw has not a transversal compression strength adapted to provide the straw with resistance against the application of a printing roller or cylinder, since this straw does not comprise any stiffening inner wall construction.

### SUMMARY OF THE INVENTION

Accordingly the task of the present invention is to overcome the above mentioned drawbacks by providing a method for making straws which affords the possibility of making, in a simple and reliable way, an improved structure beverage sucking straw having an increased flow rate with respect to conventional sucking straws.

Within the scope of the above mentioned task, a main object of the present invention is to provide such a beverage sucking straw which is able of greatly facilitating the beverage sucking operation.

Another object of the present invention is to provide such a straw making method which affords the possibility of making low cost high flow rate sucking straws.

Yet another object of the present invention is to provide such a sucking straw making method the operating steps whereof can be carried out by conventional extruding machine, by simply modifying the dies of said machine.

According to one aspect of the present invention the above mentioned task and objects, as well as yet other objects, which will become more apparent hereinafter, are achieved by a method for making an improved structure beverage sucking straw, having the features of the main claim. According to a further aspect of the invention the objects are achieved by a straw having the features of claim 6.

### BRIEF DESCRIPTION OF THE DRAWINGS

Further characteristics and advantages of the beverage sucking straw making method according to the present invention will become more apparent hereinafter from the following detailed description of a preferred through not exclusive embodiment of the method itself, with reference to the accompanying exemplary drawings, in which:
figure 1 schematically illustrates a suitable sucking straw extruding machine therewith there are associated a straw cutting device and an optional straw printing device, of any suitable type; and
figures 2 to 5 are partial view illustrating several beverage sucking straws which can be made by the method according to the invention.

### DESCRIPTION OF THE PREFERRED EMBODIMENT

With reference to the above mentioned figures of the accompanying drawings, the method for making improved structure beverage sucking straws according to the present invention essentially provides for the use of an extruding machine, generally indicated at the reference number 1, on the extruding head of which there is mounted a suitable extruding die adapted to form a plurality of adjoining small channels 2, said small channels jointly defining a perimetrical closed continuous line 3 in turn defining an elongated profile shape.

The extruding machine will be supplied with a plastics material suitable for food packages which, depending on requirements, can be either transparent, translucid or colored.

Downstream of the extruding head there are provided roller conveyors 4 for slidingly displacing the extruded material or product 5, so as to cause said extruded material to suitable cool and stiffen.

Downstream of the mentioned roller conveyors there is arranged a cutting device, indicated overally at the reference number 6, adapted to cut the extruded material in suitable lengths, corresponding to the lengths of the composite structure straws.

Upstream of the cutting device, moreover, a printing apparatus 8 can be advantageously arranged, of any suitable type, adapted to print on one or both faces 9 of the extruded material, wordings and/or patterns for advertising or decorative purposes.

In this connection it should be pointed out that the thus made straws 7 will have a flattened configuration and, accordingly, they will be provided with two substantially flat opposite surfaces.

Thus, the printing surfaces will be rather large, thereby immediately visible patterns can be printed thereon.

It should moreover by pointed out that of the mentioned small channels 2 the innermost channels are preferably defined by parallel longitudinal diaphgrams which are formed perpendicularly to the two main surfaces of the straws, the two small channels arranged at the ends of each straw being delimited, on the outside, by the corresponding side walls of the straw.

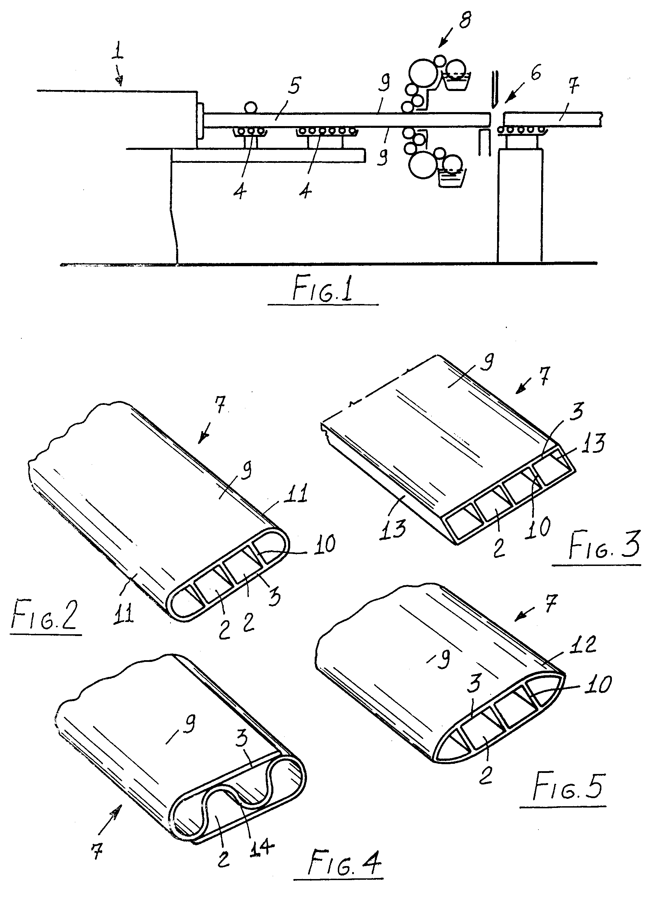

More specifically, in the straw illustrated in figure 2, the outermost small channels are defined by a substantially semicircular side wall 11, whereas, in the straw shown in figure 5, those same outermost small channels are defined, on three sides thereof, by a surface 12 the cross-section of which has an acute angle shape.

The straw being shown in figure 3, in turn, has square or rectangular cross-section small channels the channel cross-section being defined, laterally, by small walls 13 perpendicular to the two main surfaces of the small channels.

In figure 4, vice versa, there is illustrated a portion of a straw the small channels 2 of which are defined by a sinuous surface 14 which is tangent to the main surfaces of said straw.

In each case, the profile or contour of the straw is designed to fit in the best way the lip contour so as to prevent air from being sucked in together with the beverage.

An important feature of the method according to the present invention is that, for making the straws, there are used conventional extruding machines which are adapted to the subject method by simply replacing the extruding die.

In particular, the above mentioned longitudinal diaphragms, or inner ribs, 10, are made with a thickness adapted to provide said ribs with a double practical function.

More specifically, the mentioned ribs will have a strength sufficient to resist against the pressure of the printing operation, one one or both faces of the straw, and, in the meanwhile, said ribs will be sufficiently flexible to allow for the straw profile to perfectly mate with the lips of the user.

From the above disclosure it should be apparent that the inventive method fully achieves the intended task and objects.

While the invention has been disclosed with reference to a preferred embodiment thereof, it should be apparent that the disclosed embodiment is susceptible to several modifications and variations all of which will come within its scope as defined in the accompanying claims.

## Claims

1. A method for making an improved structure beverage sucking straw, comprising a step of extruding a food plastic material through an extruding die, by means of an extruding machine (1) and a step of cutting therefrom an extruded product (5) having a flat tubular body in which there are defined a plurality of joining channels (2) which longitudinally extend and two substantially flat major surface opposite faces (9) with a plurality of longitudinal diaphgrams (10) arranged transversely with respect to said two opposite faces (9), characterized in that in said extruding step, by means of said extruding die, to said product (5) there is imparted a contour with a cross-section delimited by a closed line (3).

2. A method, according to Claim 1, characterized in that, in said extruding step, said extruding machine (1) is supplied with a transparent food plastic material.

3. A method, according to Claim 1, characterized in that, in said extruding step, said extruding machine (1) is supplied with a translucid food plastic material.

4. A method, according to Claim 1, characterized in that, in said extruding step, said extruding machine (1) is supplied with a colored food plastic material.

5. A method, according to one or more of the preceding claims, characterized in that, downstream of said extruding machine, there are provided roller conveyors (4) for conveying said extruded product (5) and that said method further comprises a printing operation which is performed by printing wordings or patterns on one of said opposite faces or on both said opposite faces (9).

6. A straw, made by a method according to one or more of the preceding claims, said straw including a straw body (7) having an elongated and flat configuration with two major surface substantially flat opposite faces (9) and with a plurality of channels (2) adjoining one another transversely of the extension of said straw body (7), said channels being separated from one another by a plurality of longitudinal diaphgrams (10) arranged transversely of said two opposite faces (9), characterized in that said body (7) has, in cross-section, a contour delimited by a closed perimetral line (3).

7. A straw, according to Claim 6, characterized in that the two end channels (2) of said plurality of channels are delimited, on the outer side thereof, by the corresponding side walls of the straw body (7).

8. A straw, according to one or more of the preceding claims, characterized in that said diaphgrams (10) are substantially perpendicular to said opposite faces (9).

9. A straw, according to one or more of the preceding claims, characterized in that, in said straw body (7), said end channels are delimited by a side wall (11) of substantially semicircular configuration.

10. A straw, according to one or more of the preceding claims, characterized in that said end channels (2) are defined, on free sides, by a surface (12) having, in cross-section, the contour of an acute angle arch.

11. A straw, according to one or more of the preceding claims, characterized in that said end channels (2) have a square or rectangular cross-section delimited laterally by walls (13) perpendicular to said two opposite faces (9), said walls cooperating for forming said end channels (2).

12. A straw, according to one or more of the preceding claims, characterized in that said channels (2) are defined by a sinuous surface (14) tangent to said two opposite faces (9).

## Patentansprüche

1. Ein Verfahren zum Herstellen eines Trinkhalmes mit verbesserter Struktur, umfassend einen Schritt des Extrudierens eines lebensmitteltauglichen Plastwerkstoffes durch eine Extruderdüse mittels eines Extruders (1) und einen Schritt des Abschneidens davon eines extrudierten Produkts (5) mit einem flachen, röhrenförmigen Körper, in dem eine Vielzahl von nebeneinanderliegenden Kanälen (2), die sich longitudinal erstrecken, und zwei im wesentlichen flache, gegenüberliegende Seiten (9) größerer Oberfläche mit einer Vielzahl von longitudinalen Trennwänden (10), transversal bezüglich dieser zwei gegenüberliegenden Seiten (9) angebracht, bereitgestellt sind, dadurch gekennzeichnet, daß in diesem Schritt des Extrudierens, mittels dieser Extrudierdüse, diesem Produkt (5) ein Umriß mit einem Querschnitt, begrenzt durch eine geschlossene Linie (3), verliehen wird.

2. Ein Verfahren gemäß Anspruch 1, dadurch gekennzeichnet, daß in diesem Schritt des Extrudierens dieser Extruder (1) mit einem lebensmitteltauglichen transparenten Plastwerkstoff gespeist wird.

3. Ein Verfahren gemäß Anspruch 1, dadurch gekennzeichnet, daß in diesem Schritt des Extrudierens dieser Extruder (1) mit einem lebensmitteltauglichen lichtdurchlässigen Plastwerkstoff gespeist wird.

4. Ein Verfahren gemäß Anspruch 1, dadurch gekennzeichnet, daß in diesem Schritt des Extrudierens dieser Extruder (1) mit einem lebensmitteltauglichen gefärbten Plastwerkstoff gespeist wird.

5. Ein Verfahren gemäß einem oder mehrerer der vorhergehenden Ansprüche, dadurch gekennzeichnet, daß unterhalb dieses Extruders Rollenbahnen (4), um dieses extrudierte Produkt (5) zu befördern, bereitgestellt sind, und daß dieses Verfahren weiterhin einen Druckvorgang umfaßt, in dem das Drucken von Ausdrücken oder Mustern auf eine dieser gegenüberliegenden Seiten oder auf beide dieser gegenüberliegenden Seiten (9) durchgeführt wird.

6. Ein Halm, durch ein Verfahren gemäß einem oder mehrerer der vorhergehenden Anprüche hergestellt, dieser Halm umfassend einen Halmkörper (7) mit gestreckter und flacher Konfiguration, mit zwei im wesentlichen flachen, gegenüberliegenden Seiten (9) mit zwei größeren Oberflächen und mit einer Vielzahl von nebeneinanderliegenden, zur Ausdehnung dieses Halmkörpers (7) transversalen Kanälen (2); diese Kanäle sind voneinander durch eine Vielzahl von longitudinalen Trennwänden (10) getrennt, die transversal zu diesen zwei gegenüberliegenden Seiten (9) angeordnet sind;
- dadurch gekennzeichnet, daß dieser Körper (7) in seinem Querschnitt einen Umriß besitzt, der durch eine geschlossene perimetrische Linie (3) begrenzt ist.

7. Ein Halm gemäß Anspruch 6, dadurch gekennzeichnet, daß die zwei Endkanäle (2) dieser Vielzahl von Kanälen an deren äußerer Seite durch die entsprechenden Seitenwände des Halmkörpers (7) begrenzt sind.

8. Ein Halm gemäß einem oder mehrerer der vorhergehenden Ansprüche, dadurch gekennzeichnet, daß diese Trennwände (10) im wesentlichen senkrecht zu diesen gegenüberliegenden Seiten (9) stehen.

9. Ein Halm gemäß einem oder mehrerer der vorhergehenden Ansprüche, dadurch gekennzeichnet, daß in diesem Halmkörper (7) diese Endkanäle durch eine Seitenwand (11) im wesentlichen halbkreisförmiger Konfiguration begrenzt sind.

10. Ein Halm gemäß einem oder mehrerer der vorhergehenden Ansprüche, dadurch gekennzeichnet, daß diese Endkanäle (2) an freistehenden Seiten durch eine Oberfläche (12) definiert sind, die im Querschnitt den Umriß eines Bogens mit spitzem Winkel besitzt.

11. Ein Halm gemäß einem oder mehrerer der vorhergehenden Ansprüche, dadurch gekennzeichnet, daß diese Endkanäle (2) einen quadratischen oder rechteckigen Querschnitt besitzen, der seitlich durch Wände (13) begrenzt ist, die senkrecht zu diesen zwei gegenüberliegenden Seiten (9) stehen; diese Wände wirken zur Bildung dieser Endkanäle (2) zusammen.

12. Ein Halm gemäß einem oder mehrerer der vorhergehenden Ansprüche, dadurch gekennzeichnet, daß diese Kanäle (2) durch eine schlängelnde Oberfläche (14), diese zwei gegenüberliegenden Seiten (9) berührend, definiert sind.

## Revendications

1. Procédé pour fabriquer une paille à boire à structure améliorée, comprenant une étape d'extrusion d'une matière plastique pour aliments au travers d'une filière d'extrusion au moyen d'une presse à extrusion (1) et une étape de coupage de celle-ci d'un produit extrudé (5), ayant un corps tubulaire plat dans lequel une multiplicité de conduits avoisinants (2) qui s'étendent longitudinalement sont définis et deux faces opposées (9) substantiellement plates à surface majeure avec une multiplicité de diaphragmes longitudinaux (10) arrangés transversalement par rapport auxdites deux faces opposées (9), caractérisé en ce que pendant ladite étape d'extrusion, au moyen de ladite filière d'extrusion, audit produit (5) est imprimé un contour avec une coupe transversale délimitée par une ligne fermée (3).

2. Procédé selon la Revendication 1, caractérisé en ce que pendant ladite étape d'extrusion ladite presse à extrusion (1) est alimentée avec une matière plastique pour aliments transparente.

3. Procédé selon la Revendication 1, caractérisé en ce que pendant ladite étape d'extrusion ladite presse à extrusion (1) est alimentée avec une matière plastique pour aliments translucide.

4. Procédé selon la Revendication 1, caractérisé en ce que pendant ladite étape d'extrusion ladite presse à extrusion (1) est alimentée avec une matière plastique pour aliments colorée.

5. Procédé selon l'une ou plusieures des Revendications précédentes, caractérisé en ce qu'en aval de ladite presse à extrusion y sont prévus des transporteurs à rouleaux (4) pour convoyer ledit produit extrudé (5), et que ledit procédé en plus comprend une opération d'impression qui est effectuée en imprimant des expressions ou bien des dessins sur l'une desdites faces opposées ou sur chacune desdites faces opposées (9).

6. Paille, fabriquée avec un procédé selon l'une ou plusieures des Revendications précédentes, ladite paille comprenant un corps de paille (7) ayant une configuration allongée et plate avec deux faces opposées (9) substantiellement plates avec deux surfaces majeures et avec une multiplicité de conduits (2) avoisinants l'un l'autre transversalement à l'extension dudit corps de paille (7), lesdits conduits étant séparés les uns des autres par une multiplicité de diaphragmes longitudinaux (10) arrangés transversalement auxdites deux faces opposées (9), caractérisée en ce que ledit corps (7) a un contour délimité, en coupe transversale, par une ligne périmetrique (3) fermée.

7. Paille selon la Revendication 6, caractérisée en ce que les deux conduits terminaux (2) de ladite multiplicité de conduits sont délimités sur leur côté extérieur par les parois latérales correspondantes dudit corps de paille (7).

8. Paille selon l'une ou plusieures des Revendications précédentes, caractérisée en ce que lesdits diaphragmes (10) sont substantiellement perpendiculaires audites faces opposées (9).

9. Paille selon l'une ou plusieures des Revendications précédentes, caractérisée en ce que dans ledit corps de paille (7) lesdits conduits terminaux sont délimités par une paroi latérale (11) à configuration substantiellement demi-circulaire.

10. Paille selon l'une ou plusieures des Revendications précédentes, caractérisée en ce que lesdits conduits terminaux (2) sont définis sur des côtés libres par une surface (12) ayant en coupe transversale le contour d'un arc à angle aigu.

11. Paille selon l'une ou plusieures des Revendications précédentes, caractérisée en ce que lesdits conduits terminaux (2) ont une coupe transversale carrée ou rectangulaire délimitée latéralement par des parois (13) perpendiculaires auxdites deux faces opposées (9), lesdites parois coopérant pour former lesdits conduits terminaux (2).

12. Paille selon l'une ou plusieures des Revendications précédentes, caractérisée en ce que lesdits conduits (2) sont définis par une surface sinueuse (14) tangente auxdites deux faces opposées (9).
